# EUROPÄISCHE PATENTSCHRIFT

(11) **EP 1 243 891 B1**
(45) Veröffentlichungstag und Bekanntmachung des Hinweises auf die Patenterteilung: **24.06.2009**
(21) Anmeldenummer: 02004720.5
(22) Anmeldetag: 01.03.2002
(51) Int. Cl.: G01D 5/249, G01D 5/14, G01D 5/16

(54) **Winkelmessvorrichtung zur Erfassung der absoluten Position und der Anzahl der Umdrehungen einer Welle**
Angle measuring device for accurately sensing the absolute position and the number of revolutions of a shaft& x9;
Dispositif de mesure d'angle pour détecter avec précision la position absolue et le nombre de rotations d'un arbre

(30) Priorität: 22.03.2001 DE 10114258
(43) Veröffentlichungstag der Anmeldung: 25.09.2002
(73) Patentinhaber: Baumer Holding AG, 8501 Frauenfeld (CH)
(72) Erfinder: Braun, Christof, Dipl.-Ing., 78078 Fischbach (DE); Jahnke, Siegfried, 78652 Deisslingen (DE)
(74) Vertreter: Grünecker, Kinkeldey, Stockmair & Schwanhäusser Anwaltssozietät

(56) Entgegenhaltungen:
- DE-A1- 4 129 576
- DE-A1- 19 548 385
- US-A- 4 746 859
- PATENT ABSTRACTS OF JAPAN Bd. 018, Nr. 596 (P-1825), 14. November 1994 (1994-11-14) & JP 06 221873 A (NIKON CORP), 12. August 1994 (1994-08-12)
- PATENT ABSTRACTS OF JAPAN Bd. 018, Nr. 293 (P-1747), 3. Juni 1994 (1994-06-03) & JP 06 058774 A (NIKON CORP), 4. März 1994 (1994-03-04)
- PATENT ABSTRACTS OF JAPAN Bd. 017, Nr. 269 (P-1544), 25. Mai 1993 (1993-05-25) & JP 05 010782 A (AI ENU AARU KENKIYUUSHIYO:KK), 19. Januar 1993 (1993-01-19)
- PATENT ABSTRACTS OF JAPAN Bd. 013, Nr. 543 (P-970), 6. Dezember 1989 (1989-12-06) & JP 01 224622 A (OMRON TATEISI ELECTRON CO), 7. September 1989 (1989-09-07)
- PATENT ABSTRACTS OF JAPAN Bd. 1996, Nr. 02, 29. Februar 1996 (1996-02-29) -& JP 07 260515 A (COPAL CO LTD), 13. Oktober 1995 (1995-10-13)

## Beschreibung

Die Erfindung betrifft eine Winkelmessvorrichtung zur Erfassung der genauen absoluten Positionen und der Anzahl der Umdrehungen einer Geberwelle nach dem Oberbegriff des Anspruchs 1.

### Stand der Technik

Es sind Winkelmessvorrichtungen bekannt, die beispielsweise mit einer Winkelkodierscheibe und entsprechenden optischen Abtastvorrichtungen, wie beispielsweise Photodioden, LED, usw., aufweisen (vgl. z.B. DE 42 29 610). Mit Hilfe einer solchen Scheibe kann die absolute Winkelposition einer mit dieser Scheibe verbundenen Drehgeberwelle innerhalb eines Winkelintervalls von 0° bis 360° erfasst werden.

Darüber hinaus sind auch Winkelmessvorrichtungen bekannt, die beispielsweise mittels einem induktiven Messprinzip die Position der Drehgeberwelle innerhalb eines Winkelintervalls von 0° bis 360° erfasst (vgl. z.B. EP 0 932 018).

DE 41 29 576 A1 offenbart ein magnetisches Messsystem zur Drehwinkelmessung.

Nachteilig bei Vorrichtungen gemäß dem Stand der Technik ist, dass diese mit vergleichsweise großem Aufwand realisiert sind und die Auflösung der Bestimmung der Position der Geberwelle beschränkt bzw. relativ gering ist.

### Aufgabe und Vorteile der Erfindung

Aufgabe der Erfindung ist es demgegenüber, eine Winkelmessvorrichtung zur Erfassung der genauen absoluten Position einer Geberwelle während einer vollständigen Umdrehung der Geberwelle in einem Winkelintervall von 0° bis 360° und zur Erfassung der Anzahl der Umdrehungen der Geberwelle vorzuschlagen, mit der zum Einen der Aufwand deutlich reduziert und zum Anderen die Genauigkeit der Winkelangabe entscheidend verbessert wird.

Diese Aufgabe wird, ausgehend von einer Winkelmessvorrichtung der einleitend genannten Art, durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Mit Hilfe einer derartigen, erfindungsgemäßen Aufnahmeeinheit können die Messgrößen unter anderem mittels der Auswerteeinheit in eine Winkelangabe mit relativ hoher Auflösung umgewandelt werden. Im Gegensatz zum Stand der Technik wird durch das Erzeugen entsprechender Messgrößen kein zusätzliches, stimulierendes, periodisches Signal benötigt, so dass eine Vorrichtung fallen kann, die eine entsprechende Messgröße erzeugt, wodurch sich der konstruktive Aufwand einer erfindungsgemäßen Winkelmessvorrichtung gegenüber dem Stand der Technik deutlich reduziert.

Vorzugsweise ist die Aufnahmeeinheit so ausgelegt, dass die Messgrößen den Verlauf einer trigonometrischen, insbesondere sinusförmigen, Funktion aufweisen. Ein entsprechender Verlauf der Messgröße bildet in vorteilhafterweise den Winkel einer rotierenden Welle ab. Dementsprechend kann ein entsprechender Verlauf ohne großen Aufwand realisiert werden.

Die Aufnahmeeinheit umfasst ein mit der Geberwelle gekoppeltes, drehbares Betätigungselement, so dass der Verlauf der Messgrößen vor allem in Kombination mit einer besonderen Weiterbildung der Erfindung, wobei die Aufnahmeeinheit wenigstens zwei in Drehrichtung zueinander versetze Aufnahmeelemente umfasst, mit relativ geringem Aufwand umgesetzt werden kann.

Zwei entsprechend angeordnete Aufnahmeelemente ermöglichen in besonders einfacher Weise die Realisierung des Phasenversatzes der periodischen Messgrößen. Die Aufnahmeelemente können beispielsweise als induktive, kapazitive oder vergleichbare Aufnahmeelemente ausgebildet werden, wobei die jeweilige Ausgestaltung der Ausnahmeelemente insbesondere in Abhängigkeit des Betätigungselementes vorzusehen ist.

Beispielsweise kann das Betätigungselement als elektrische Spule zur Erzeugung eines Magnetfeldes ausgebildet werden. Das Betätigungselement ist als Permanentmagnet ausgebildet, wodurch insbesondere der Aufwand zur Realisierung des Betätigungselementes wesentlich verringert wird. Ein entsprechender Permanentmagnet erzeugt ein vorteilhaft konstantes Magnetfeld.

Vor allem in Kombination mit einem Betätigungselement, das ein Magnetfeld erzeugt, mittels dem Permanentmagneten, sind die Aufnahmeelemente als magnetisch sensitive Aufnahmeelemente ausgebildet. Demzufolge erzeugt jedes Aufnahmeelement jeweils eine von der Stellung des Betätigungselementes abhängige Messgröße, die mittels der Auswerteeinheit zur Winkelangabe der erfassten Position der Geberwelle verwendet werden kann.

Gegebenenfalls können magnetoresistive Sensoren als Aufnahmeelemente verwendet werden. In vorteilhafter Weise sind die Aufnahmeelemente als Hall-Elemente ausgebildet. Entsprechende stromdurchflossene Hall-Elemente erzeugen in Abhängigkeit der insbesondere statischen Position der Geberwelle zwei Spannungen als Messgrößen, deren Verhältnis zueinander durch die Anordnung der in Drehrichtung zueinander versetzten Aufnahmeelemente in eindeutiger Weise festgelegt ist. Insbesondere dieses Verhältnis wird zur Auswertung der Messgrößen bzw. zur Winkelangabe der erfassten Positionen der Geberwelle verwendet.

Grundsätzlich erzeugen die Aufnahmeelemente im Zusammenwirken mit dem entsprechenden Betätigungselement jeweils eine periodische Messgröße, deren Periode einem ganzzahligen Vielfachen des Winkelintervalls entspricht. Vorzugsweise weist jede Messgröße eine Periode pro vollständiger Umdrehung der Geberwelle auf. Hierfür wird ein Permanentmagnet mit einem Nord- und einem Südpol verwendet so dass bei einer Umdrehung des Permanentmagneten jedes Aufnahmeelement eine Messgröße generiert, deren Verlauf exakt einer Sinuswelle entspricht.

Es ist auch denkbar, dass beispielsweise ein Permanentmagnet mit zwei, drei oder mehr Nordpole bzw. Südpole verwendet werden kann, wobei die Periode der Messgröße demzufolge einer halben, drittel, usw. Umdrehdung der Geberwelle entspricht. Vorzugsweise ist die Auswerteeinheit derart auszubilden, dass sie insbesondere die einzelnen Perioden erfassen und entsprechend zur Winkelangabe berücksichtigen kann. Beispielsweise kann dies mittels einer Selektierung gegebenenfalls des Null-Durchganges der Amplitude oder dergleichen einer oder mehrerer Messgrößen realisiert werden.

In einer besonderen Weiterbildung der Erfindung umfasst die Auswerteeinheit wenigstens eine Kompensationseinheit zur Kompensation von Störungen. Mit Hilfe dieser Maßnahme können beispielsweise äußere Störungen ausgeglichen werden.

Vorteilhafterweise umfasst die Kompensationseinheit wenigstens ein Subtraktionsglied zur Subtraktion zweier Messgrößen. Hierdurch wird gewährleistet, dass insbesondere Störungen, die sich zu den Messgröße addieren, wie beispielsweise Thermospannungen oder dergleichen, durch Subtraktion der Messgrößen kompensiert werden. Insbesondere aufgrund der räumlich relativ eng zueinander anzuordnenden Aufnahmeelemente wird gewährleistet, dass die Aufnahmeelemente nahezu gleich temperiert sind und hierdurch nahezu gleich Thermospannungen anliegen, so dass diese weitestgehend kompensierbar sind.

Demzufolge generiert je ein Subtraktionsglied aus jeweils zwei Messgrößen je eine weiterverarbeitete Messgröße, die im Allgemeinen periodisch ist und von der genauen Position der Geberwelle abhängt.

In einer vorteilhaften Ausführungsvariante umfasst die Kompensationseinheit wenigstens eine Divisionsvorrichtung zur Division zweier Messgrößen. Mit Hilfe einer entsprechenden Divisionsvorrichtung werden Störungen, wie beispielsweise ein äußeres, fremdes Magnetfeld oder dergleichen, die sich insbesondere als Störfaktor zu den Messgrößen multiplizieren, weitestgehend kompensiert. Hierbei wird vor allem aufgrund der vergleichsweise engen Anordnung der Aufnahmeelemente gewährleistet, dass entsprechende störende äußere Einflüsse in nahezu gleicher Art und Weise auf die Aufnahmeelemente einwirken, so dass aufgrund der Quotientenbildung diese beinahe zu 100% eliminiert werden. Beispielsweise entfallen mit Hilfe dieser Maßnahme aufwendige Schutzvorrichtungen zur Abschirmung beispielsweise äußerer Magnetfelder oder dergleichen.

Vorzugsweise umfasst die Divisionsvorrichtung wenigstens einen Analog-Digital-Wandler (A/D-Wandler). Ein A/D-Wandler bildet gewöhnlich ein Verhältnis zwischen einem Messsignal und einem Referenzsignal ab, wobei ein entsprechender Faktor multipliziert wird. Der Faktor hängt insbesondere von der vom A/D-Wandler zu verarbeitenden Bit-Anzahl ab. Im Allgemeinen wird bisher unter anderem das Referenzsignal relativ stabil gehalten. Hierfür wird gegebenenfalls eine vergleichsweise aufwendige Stabilisierung des Referenzsignals vorgesehen.

Vorzugsweise wird die Verhältnisbildung des A/D-Wandlers zur Division zweier Messgrößen gemäß der Erfindung vorgesehen. Alternativ hierzu könnte der Quotient zweier Messgrößen auch mittels eines Mikroprozessors oder dergleichen berechnet werden. Gegenüber entsprechenden Alternativen ist ein A/D-Wandler bei höherer Genauigkeit der Verhältnisbildung jedoch wesentlich schneller bei der Verarbeitung. Derzeit benötigt beispielsweise ein A/D-Wandler pro Berechnung bzw. Wandlung ca. 10 Mikrosekunden. Im Gegensatz hierzu benötigt ein derzeitiger Mikroprozessor ca. 30 Mikrosekunden pro Quotientenberechnung.

Vorteilhafterweise wird sowohl ein Subtraktionsglied als auch eine Divisionsvorrichtung verwendet, so dass die Aufnahmeeinheit insbesondere derart auszubilden ist, dass diese wenigstens vier phasenversetzte, periodische, vor allem sinusförmige, Messgrößen erzeugen kann. Bei dieser Ausführungsvariante der Erfindung werden beispielsweise jeweils zwei, um eine halbe Periode phasenversetzte Messgrößen miteinander subtrahiert, so dass hierdurch zwei entsprechende aufbereitete Messgrößen erzeugt werden, die zur Bildung des Quotienten zur Divisionsvorrichtung weitergeleitet werden. Demzufolge wird, ausgehend von wenigstens vier Messgrößen, eine Messgröße generiert, die insbesondere von der genauen Position der Geberwelle abhängt und gegebenenfalls zur Winkelangabe weiterverarbeitet werden kann.

Hierbei ist eine geradzahlige Anzahl an Messgrößen zur Weiterverarbeitung, beispielsweise zur Subtraktion und/oder zur Division jeweils zweier Messgrößen, von Vorteil.

In einer besonderen Weiterbildung umfasst die Divisionsvorrichtung wenigstens eine Selektionseinheit zur Selektion wenigstens eines Teils einer Messgröße als Divisor. Mit Hilfe dieser Maßnahme kann gewährleistet werden, dass beispielsweise das Messsignal mit dem größeren Betrag dem Referenzeingang des A/D-Wandlers zugeführt werden kann, so dass eine vorteilhafte Betriebsweise des A/D-Wandlers realisierbar ist. Hierdurch wird insbesondere das sogenannte Rauschen entsprechender Halbleiterelemente des A/D-Wandlers möglichst gering gehalten.

Grundsätzlich kann zur Verbesserung der Betriebsweise unter anderem des Analogdigitalwandlers ein sogenanntes Offsetsignal auf die Messgrößen bzw. dessen Eingangsgrößen aufgeprägt werden. Gegebenenfalls kann dies bei der Bildung der Differenz zweier Messgrößen realisiert werden, beispielsweise mittels eines sogenannten Instrumentations-Verstärkers oder dergleichen.

In einer vorteilhaften Ausführungsform der Erfindung ist wenigstens ein Zeigerelement zur Erzeugung eines Zeigersignals für die Anzeige eines vorgegebenen Wertes bzw. Wertebereiches einer Messgröße vorgesehen. Mit Hilfe eines entsprechenden Zeigersignals kann beispielsweise die zuvor beschriebene Auswahl der jeweils größeren Messgröße als sogenanntes Referenzsignal des A/D-Wandlers signalisiert werden.

Darüber hinaus kann beispielsweise auch ein oder mehrere Zeigersignale zur Signalisierung beispielsweise der positiven bzw. negativen Halbwellen einer oder mehrerer Messgrößen verwendet werden. Hierdurch kann beispielsweise die oben erwähnte Subtraktion zweier Messgrößen derart erfolgen, dass jeweils die Messgröße mit dem jeweils kleineren Wert der Amplitude von der Messgröße mit dem größeren Wert der Amplitude subtrahiert wird.

Beispielsweise können zwei um eine halbe Periode phasenversetzte Messgrößen derart miteinander subtrahiert werden, dass jeweils die negative Halbwelle von der positiven Halbwelle abgezogen wird, so dass im Ergebnis eine Messgröße mit doppelter Amplitude und ausschließlich positiven Halbwellen generiert wird. Hierbei wird in vorteilhafter Weise eine Verstärkung der Messgrößen realisiert, ohne dass hierbei ein relevanter Fehler bei der Verstärkung entsteht.

Grundsätzlich kann bei Verwendung von beispielsweise drei Zeigerelementen der Winkelintervall in acht (2³) Wertebereiche unterteilt werden, wobei gegebenenfalls entsprechende Zeigersignale mittels der sich periodisch ändernden Messgrößen generiert werden. Vorzugsweise ist ein Zeigerelement als Komperator oder dergleichen zur Generierung eines Zeigersignals, insbesondere eines sogenannten Flags, ausgebildet.

Vorteilhafterweise umfasst die Umdrehungsmessvorrichtung wenigstens ein Schaltelement, das in Abhängigkeit des drehbaren Betätigungselementes geöffnet bzw. geschlossen wird. Durch die Verwendung des drehbaren Betätigungselementes zur Erfassung der Anzahl der vollständig durchlaufenen Umdrehungen als auch zur Erzeugung der periodischen Messgrößen wird der konstruktive Aufwand der erfindungsgemäßen Winkelmessvorrichtung reduziert.

Darüber hinaus können beispielsweise zwei Schaltelemente als Reed-Kontakte ausgebildet werden, so dass insbesondere bei Verwendung eines magnetischen Betätigungselementes der konstruktive Aufwand vermindert wird. Unter anderem können entsprechende Reed-Kontakte beispielsweise gemäß der Druckschrift DE 42 29 610 A1 verwendet werden.

### Ausführungsbeispiel

Ein Ausführungsbeispiel der Erfindung ist in der Zeichnung dargestellt und wird anhand der Figuren nachfolgend näher erläutert.

Im Einzelnen zeigt
- Fig. 1: ein Blockdiagramm einer erfindungsgemäßen Winkelmessvorrichtung,
- Fig. 2: einen Verlauf von vier Messgrößen einer Aufnahmeeinheit,
- Fig. 3: einen Verlauf gemäß Figur 2 einschließlich zweier Vorzeichenflags,
- Fig. 4: einen Verlauf einer vorzeichenberichtigten Subtraktion der Messgrößen gemäß Figur 3,
- Fig. 5: einen Verlauf von Eingangsmessgrößen eines A/D-Wandlers und
- Fig. 6: einen Verlauf von Eingangsmessgrößen sowie einer Ausgangsmessgröße eines weiteren A/D-Wandlers.

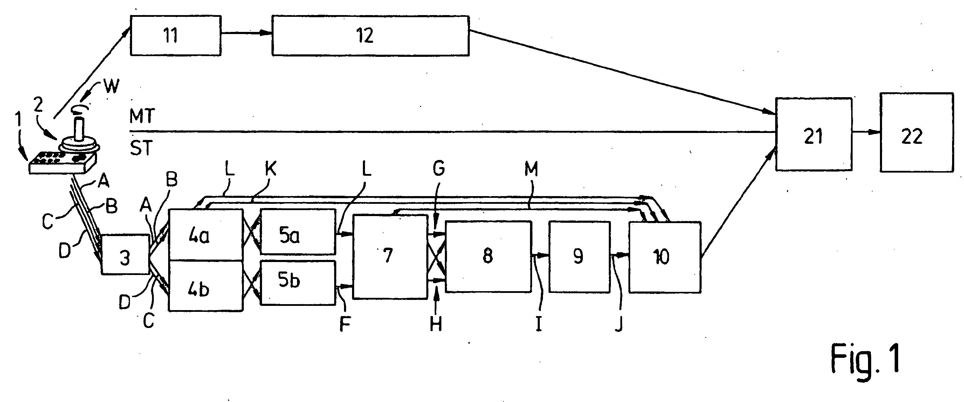

In Figur 1 ist ein Blockdiagramm einer erfindungsgemäßen Winkelmessvorrichtung in schematischer Darstellung aufgeführt. Hierbei ist ein Kreuz-Hall-Sensor 1 sowie ein Permanentmagnet 2 dargestellt. Der Permanentmagnet 2 dreht sich um eine nicht näher dargestellte Drehachse mit einem Winkel W. Der Permanentmagnet 2 ist weiterhin in nicht näher dargestellter Weise mit einer Geberwelle der Winkelmessvorrichtung gekoppelt.

Bei dem dargestellten Kreuz-Hall-Sensor 1 gemäß Figur 1 handelt es sich beispielhaft um eine handelsübliche SensorEinheit mit mehreren, kreuzartig angeordneten Hall-Sensor-Elementen, wobei die Abmessung des skizzierten, sensitiven Hall-Kreuzes ca. 1 mal 1 Millimeter oder weniger betragen kann. Insbesondere aufgrund dieser vergleichsweise kleinen Abmessungen weisen die einzelnen Hall-Elemente des Kreuz-Hall-Sensors 1 nahezu die gleiche Temperatur auf und werden von gegebenenfalls vorhandenen äußern Störfeldern in gleicher Art und Weise beeinflusst.

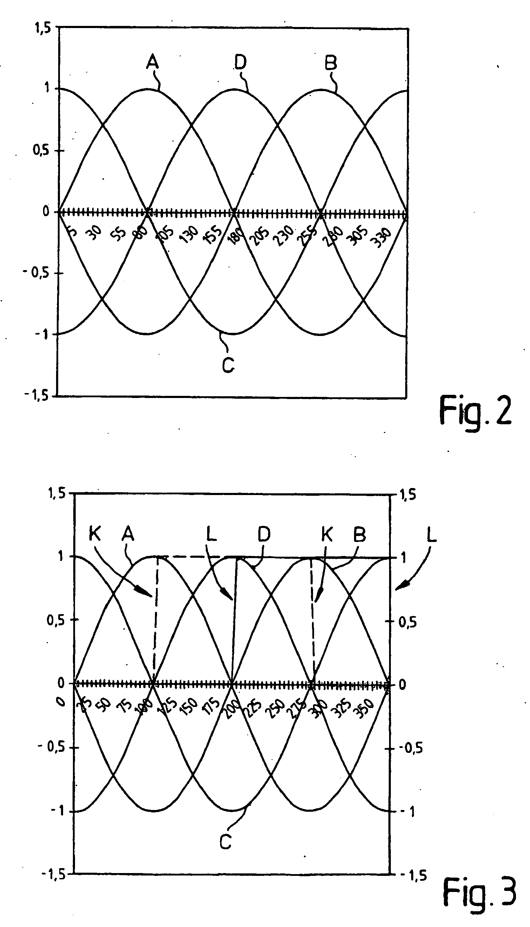

Der Kreuz-Hall-Sensor 1 erzeugt vorzugsweise vier sinusförmige Signale A, B, C, D. Der Verlauf der Signale A, B, C, D ist insbesondere in Figur 2 sowie Figur 3 dargestellt. Die vier Signale A, B, C, D entsprechen dem Sinus des Winkels W und sind jeweils um 90° zueinander versetzt.

Nachfolgend werden die Signale A, B als Sinussignale und die Signale C, D als Kosinussignale bezeichnet. Hierbei sind die Sinussignale um 180° zueinander phasenverschoben, das heißt A = sin (W) und B = sin (W + 180°). Die Kosinussignale sind ebenfalls um 180° zueinander phasenverschoben, das heißt C = cos (W) = sin (90° - W) und D = cos (W + 180°).

Die vier Signale A, B, C, D werden gemäß Figur 1 zu einem Glied 3 geleitet, wobei dieses für jedes Signal A, B, C, D je ein sogenanntes Sample-And-Hold-Glied zur besseren Weiterbearbeitung der Signale A, B, C, D umfasst. Anschließend werden die Sinussignale und die Kosinussignale separat zu einem Auswahlglied 4a bzw. 4b zugeführt, wobei insbesondere mittels entsprechender Komparatoren ein Flag K sowie ein Flag L gesetzt wird. Der Verlauf der Flag K, L ist in Figur 3 verdeutlicht. Hierbei wird ersichtlich, dass das Flag K auf 1 gesetzt ist, solange das Signal D eine positive Amplitude aufweist. Entsprechend ist das Flag L auf 1 gesetzt, solange das Signal B eine positive Amplitude aufweist.

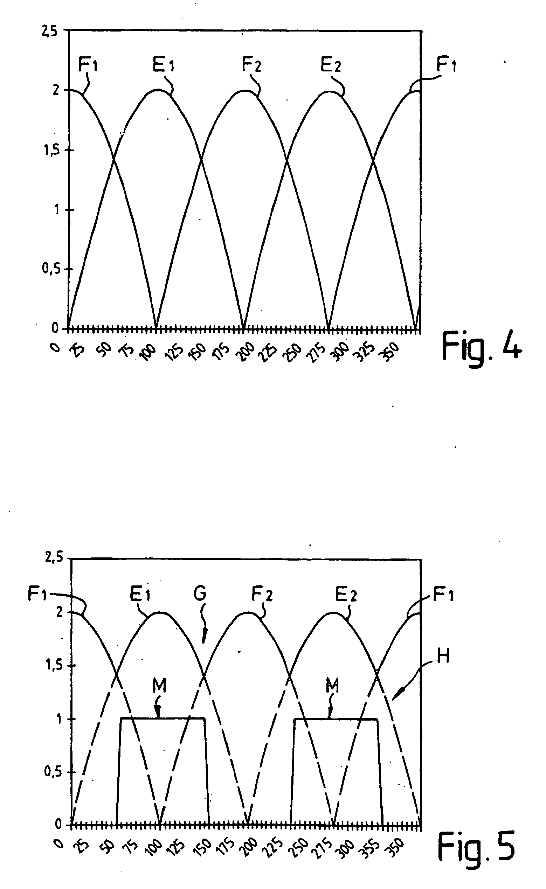

Die entsprechend vorzeichenberichtigten Sinussignale bzw. Kosinussignale werden jeweils einem Subtraktionsglied 5a bzw. 5b zugeführt, so dass ein Signal E bzw. ein Signal F gemäß Figur 4 gebildet wird. Hierbei subtrahiert die nicht näher dargestellte Auswerteeinheit die Signale A, B, C, D in der Weise, dass das kleinere Signal A, B der Sinussignale vom größeren Signal A, B abgezogen wird und sich eine Verdopplung der Amplitude des Signals E ergibt. Darüber hinaus ergibt sich hierdurch, dass das Signal E lediglich aus positiven Halbwellen besteht. Hierbei ist das Signal E₁ = A - B und das Signal E₂ = B - A.

Entsprechendes trifft für die Kosinussignale zu, wobei das Signal F₁ = C - D und das Signal F₂ = D - C ist.

Die Signale E bzw. F werden einem Auswahlglied 7 zugeführt, wobei ein Flag M = 1 gesetzt wird, solange das Signal E größer als das Signal F gemäß Figur 5 ist.

Gemäß Figur 1 werden Signale G bzw. H einem A/D-Wandler 8 zugeführt. Das Signal G wird hierbei an den sogenannten Referenzeingang des A/D-Wandlers 8 angelegt und das gestrichelt dargestellte Signal H dem sogenannten Signaleingang des A/D-Wandlers 8.

Das Signal G wird dadurch gebildet, dass das Signal E im Bereich, bei dem das Flag M = 1 gesetzt ist, als Referenzsignal G verwendet und im Bereich, bei dem das Flag M = 0 ist, wird das Signal F als Referenzsignal G verwendet.

Dementsprechend wird das Signal H dadurch gebildet, dass die gestrichelt dargestellten Bereiche der Signale E bzw. F dem A/D-Wandler 8 an den sogenannten Signaleingang angelegt wird.

Demzufolge wird das jeweils kleinere Signal E bzw. F als Signal H und das jeweils größere Signal E bzw. F als Signal G verwendet. Das bedeutet, dass das Verhältnis der beiden Signale E bzw. F zueinander unter anderem mit Hilfe des Flags M bestimmt, welches als Signal H bzw. G ausgewählt wird.

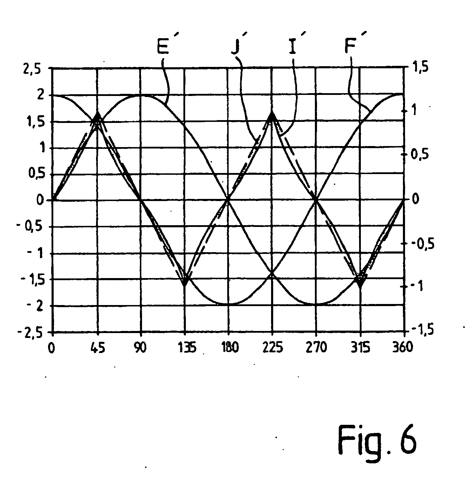

Der A/D-Wandler 8 berechnet aufgrund dieser Vorgehensweise das Verhältnis des Signals H zu dem Signal G und multipliziert dieses mit einem Faktor, der in Abhängigkeit der Bit-Anzahl des A/D-Wandlers 8 steht. Am Ausgang des A/D-Wandlers 8 liegt somit ein Signal I an, das in Anlehnung an Figur 6 jeweils für einen Bereich von 90° als Tangenssignal bzw. als Kotangenssignal ausgebildet ist.

In Figur 5 wird jedoch ein Sinussignal E' mit positiver und negativer Halbwelle sowie ein Kosinussignal F' mit positiver und negativer Halbwelle einem A/D-Wandler A' zugeführt, so dass der Verlauf I' nicht dem Verlauf des Ausgangssignals I, das mittels der beiden Eingangssignale E bzw. F generiert wird, entspricht.

Im Unterschied zum Verlauf des Signals I' gemäß Figur 6 wird mittels der Signale E bzw. F gemäß Figur 5 ein Signal I generiert, das in nicht näher dargestellter Weise lediglich aus positiven Halbwellen besteht. Die positiven Halbwellen erstrecken sich jeweils über einen Bereich von 90° und weisen eine Kotangens- und eine Tangens-Flanke auf, wobei sich jede Flanke über einen Bereich von 45° erstreckt.

Demzufolge nähert sich der Verlauf des nicht näher dargestellten Signals I weitestgehend einem Dreiecksverlauf an. Die zwei Flanken des Signals I verlaufen symmetrisch bezüglich der Amplitudenachse, so dass im Speicher 9 vorzugsweise lediglich eine Flanke des Signals I zur Linearisierung abgespeichert werden kann, wodurch eine deutliche Erhöhung der Auflösung der Winkelmessvorrichtung realisierbar ist. Die jeweilige Zuordnung der einzelnen Flanken des Signals I über den gesamten Winkelintervall kann mittels der Flags K, L, M erfolgen.

Das Signal I wird einem Speicher 9 zugeführt, wobei der Speicher 9 beispielsweise als sogenannte Loock-Up-Tabelle ausgeführt und mittels einem Festwertspeicher (ROM) realisiert werden kann. Der Speicher 9 erzeugt ein lineares Signal J, das einem Glied 10 zugeführt wird. Das Glied 10 ist derart ausgebildet, dass es mit Hilfe der Flags K, L, M eine Zuordnung des Signals J über den gesamten Winkelintervall von 0° bis 360° ermöglicht.

Der Ausgang des Gliedes 10 wird mit einem Wandler 21 verbunden, der insbesondere eine Codeumwandlung durchführt und ein Zusammenführen des Signals der Winkelangabe gemäß den zuvor erfolgten Ausführungen und einem Signal, das nachfolgend näher erläutert wird, realisiert.

Die zuvor dargelegten Ausführungen ermöglichen die Ausbildung der Winkelmessvorrichtung als sogenannter Absolutdrehgeber (Singleturn) ST, der gemäß den zuvor dargelegten Ausführungen innerhalb einer Umdrehung der Geberwelle für jeden Messschritt eine eindeutige kodierte Information ausgibt. In nicht näher dargestellter Weise bleibt die Dateninformation auch nach einem Spannungsausfall erhalten, unter anderem mittels entsprechender Speicherelemente wie eine Batterie oder ein Akkumulator.

Nachfolgend wird dargestellt, wie die erfindungsgemäße Winkelmessvorrichtung zugleich als Absolutdrehgeber (Multiturn) MT ausgebildet wird. Hierfür wird mittels dem Permanentmagnet 2 ein Schaltelement 11 derart geschaltet, dass dies in nicht näher ausgeführter Weise mittels einem Zähler 12 ein Signal zur Erfassung der Anzahl vollständiger Umdrehungen der Geberwelle erzeugt. Das Schaltelement 11 umfasst hierbei vorzugsweise zwei nicht näher dargestellte Reedkontakte, die aufgrund der Umdrehung der Geberwelle in vorteilhafter Weise geöffnet bzw. geschlossen werden.

Hierdurch wird das drehende Teil 2 sowohl zur Singleturn- als auch zur Multiturnabtastung verwendet. An dieser Stelle wird jedoch auf die Druckschrift DE 42 29 610 verwiesen, die in bekannter Weise die Auswertung entsprechender Signale des Schaltelementes 11 mit den erwähnten Reedkontakten und des Zählers 12 darstellt.

Der Wandler 21 führt die Signale des Multiturn MT sowie des Singleturn ST entsprechend zusammen und führt gegebenenfalls eine Codeumwandlung durch, so dass der Wandler 21 ein entsprechendes Signal an ein Glied 22 weiterleitet. Das Glied 22 kann beispielsweise das Signal weiterverarbeiten, so dass in vorteilhafter Weise mit gängigen Geräten, Maschinen oder dergleichen kompatible Signale erzeugt und von der Winkelmessvorrichtung ausgegeben werden.

Durch die Verlagerung der Differenz und der Quotientenbildung in sogenannte Hardware wird die Dauer einer Messung bzw. Wandlung beispielsweise um ca. 80 % kürzer gehalten als wenn die gesamte Auswertung mittels Software berechnet werden würde.

Mit Hilfe der geschalteten Differenzbildung wird die Spanne des A/D-Wandlers 8 auf den Betrag einer Halbwelle des Eingangssignals G bzw. H angewendet. Durch die Auswertung der Lage der Eingangssignale G bzw. H zueinander und der geschalteten Differenzbildung ergibt sich eine Erhöhung der Auflösung des gesamten Systems um ca. 3 Bits, d.h. um einen Faktor 8 (2³), über die Auflösung des A/D-Wandlers 8. Durch die Ermittlung des Quotienten I aus den beiden Differenzen E bzw. F können störende äußere Einflüsse, z.B. fremde Magnetfelder oder dergleichen, zu nahezu 100 % eliminiert werden. Daraus ergibt sich, dass unter anderem keinerlei magnetische Abschirmung der Winkelmessvorrichtung notwendig ist. Die Auswertung der Signale geschieht vorzugsweise über einen sogenannten Single-Chip-Controller. Hierbei können Singleturnauflösungen von ca. 12 bis 16 Bit und mehr realisiert werden.

Durch die Programmierbarkeit des Single-Chip-Controllers können verschiedensten Problemstellungen flexibel gelöst werden. Ein weiterer Vorteil liegt in der relativ einfachen und kostensparenden Herstellung der Winkelmessvorrichtung.

Darüber hinaus kann eine Messung der Temperatur mittels eines nicht näher dargestellten Sensors zusätzlich eine genaue Kompensation der Temperaturdrift, vorzugsweise im Laufe der Betriebsdauer, erfolgen. Weiterhin kann als zusätzlicher Nutzen hiermit ein Temperatursignal zur Verfügung gestellt werden.

Grundsätzlich kann insbesondere die Auswertung des Multiturns MT mittels dem für den Singleturn ST notwendigen Single-Chip-Controller erfolgen. Der Controller wird vorzugsweise durch einen sogenannten Interrupt an dessen Zähleingängen "aufgeweckt". Hierdurch kann eine deutliche Stromeinsparung, vorteilhafterweise vor allem bei Batteriebetrieb der Winkelmessvorrichtung, realisiert werden. Zusätzlich wird hierdurch die Multiturnauflösung in vorteilhafter Weise programmierbar, so dass beispielsweise ein Zählumfang von 16 Bit, das entspricht mehr als 65.000 Umdrehungen, und mehr mit vergleichsweise geringem Aufwand realisierbar ist.

### Bezugszeichenliste:

- 1: Kreuz-Hall-Sensor
- 2: Permanentmagnet
- 3: Glied
- 4a: Auswahlglied
- 4b: Auswahlglied
- 5a: Subtraktionsglied
- 5b: Subtraktionsglied
- 7: Auswahlglied
- 8: A/D-Wandler
- 9: Speicher
- 10: Glied
- 11: Schaltelement
- 12: Zähler
- 21: Wandler
- 22: Glied

- A: Signal
- B: Signal
- c: Signal
- D: Signal
- E: Signal
- F: Signal
- G: Signal
- H: Signal
- I: Signal
- J: Signal
- K: Flag
- L: Flag
- M: Flag
- MT: Multiturn
- ST: Singleturn
- W: Winkel

## Patentansprüche

1. Winkelmessvorrichtung zur Erfassung der genauen absoluten Position einer Geberwelle während einer vollständigen Umdrehung der Geberwelle in einem Winkelintervall von 0° bis 360° und zur Erfassung der Anzahl der Umdrehungen der Geberwelle, mit:
einer Aufnahmeeinheit (1, 2) zur Aufnahme der zu erfassenden Position der Geberwelle mit magnetisch sensitiven Aufnahmeelementen,
worin die Aufnahmeeinheit (1, 2) zur Erzeugung von wenigstens zwei phasenversetzten, periodischen Messgrößen (A bis D) ausgebildet ist,
worin die Aufnahmeeinheit (1, 2) ein mit der Geberwelle gekoppeltes, drehbares Betätigungselement (2) umfasst;
einer Auswerteeinheit (3 bis 22) zur Auswertung der zu erfassenden Position und zur Winkelangabe der erfassten Position der Geberwelle; und
mit einer Umdrehungsmessvorrichtung (11 bis 22) zur Erfassung und Ausgabe der Anzahl der vollständig durchlaufenen Umdrehungen der Geberwelle,
**dadurch gekennzeichnet, dass** das Betätigungselement (2) als Permanentmagnet (2) ausgebildet ist und sowohl zur Erfassung der Anzahl der vollständig durchlaufenen Umdrehungen als auch zur Erzeugung der periodischen Messgrößen (A bis D) dient.

2. Winkelmessvorrichtung nach Anspruch 1, in welcher die Aufnahmeeinheit (1, 2) so ausgelegt ist, dass die Messgrößen (A bis D) den Verlauf einer trigonometrischen Funktion aufweisen.

3. Winkelmessvorrichtung nach einem der vorgenannten Ansprüche, in welcher die Aufnahmeeinheit (1, 2) wenigstens zwei in Drehrichtung zueinander versetzte Aufnahmeelemente umfasst.

4. Winkelmessvorrichtung nach einem der vorgenannten Ansprüche, in welcher die Aufnahmeelemente als Hall-Elemente ausgebildet sind.

5. Winkelmessvorrichtung nach einem der vorgenannten Ansprüche, in welcher die Auswerteeinheit (3 bis 22) wenigstens eine Kompensationseinheit (4 bis 8) zur Kompensation von Störungen umfasst.

6. Winkelmessvorrichtung nach einem der vorgenannten Ansprüche, in welcher die Kompensationseinheit (4 bis 8) wenigstens ein Subtraktionsglied (4, 5) zur Subtraktion zweier Messgrößen (A bis D) umfasst.

7. Winkelmessvorrichtung nach einem der vorgenannten Ansprüche, in welcher die Kompensationseinheit (4 bis 8) wenigstens eine Divisionsvorrichtung (7, 8) zur Division zweier Messgrößen (A bis F) umfasst.

8. Winkelmessvorrichtung nach Anspruch 7, in welcher die Divisionsvorrichtung (7, 8) wenigstens einen Analog-Digital-Wandler (8) umfasst.

9. Winkelmessvorrichtung nach Anspruch 7 oder 8, in welcher die Divisionsvorrichtung (7, 8) wenigstens eine Selektionseinheit (7) zur Selektion wenigstens eines Teils einer Messgröße (E, F) als Divisor (H) umfasst.

10. Winkelmessvorrichtung nach einem der vorgenannten Ansprüche, in welcher wenigstens ein Zeigerelement (4, 7) zur Erzeugung eines Zeigersignals (K, L, M) für die Anzeige eines vorgegebenen Wertes bzw. Wertebereiches einer Messgröße (A bis F) vorgesehen ist.

11. Winkelmessvorrichtung nach einem der vorgenannten Ansprüche, in welcher die Umdrehungsmessvorrichtung (11 bis 22) wenigstens ein Schaltelement (11) umfasst, das in Abhängigkeit des drehbaren Betätigungselements (2) geöffnet bzw. geschlossen ist.

## Claims

1. Angle measuring device for accurately sensing the absolute position of an encoder shaft during a complete revolution of the sensor shaft in an angular interval of 0° to 360°, and for sensing the number of revolutions of the encoder shaft, with:
a pick-up unit (1, 2) to pick up the position, which is to be sensed, of the encoder shaft, with magnetically sensitive pick-up elements,
wherein the pick-up unit (1, 2) is in a form to generate at least two phase-offset, periodic measured variables (A to D),
wherein the pick-up unit (1, 2) includes a rotatable actuating element (2) which is coupled to the encoder shaft;
an evaluation unit (3 to 22) to evaluate the position to be sensed, and to give the angle of the sensed position of the encoder shaft; and
with a revolution measuring device (11 to 22) to sense and output the number of completed revolutions of the encoder shaft,
**characterized in that** the actuating element (2) is in the form of a permanent magnet (2), and is used both to sense the number of completed revolutions and to generate the periodic measured variables (A to D).

2. Angle measuring device according to Claim 1, wherein the pick-up unit (1, 2) is designed so that the measured variables (A to D) have the course of a trigonometric function.

3. Angle measuring device according to one of the preceding claims, wherein the pick-up unit (1, 2) includes at least two pick-up elements which are offset to each other in the direction of revolution.

4. Angle measuring device according to one of the preceding claims, wherein the pick-up elements are in the form of Hall elements.

5. Angle measuring device according to one of the preceding claims, wherein the evaluation unit (3 to 22) includes at least one compensation unit (4 to 8) to compensate for disturbances.

6. Angle measuring device according to one of the preceding claims, wherein the compensation unit (4 to 8) includes at least one subtraction element (4, 5) for subtraction of two measured variables (A to D).

7. Angle measuring device according to one of the preceding claims, wherein the compensation unit (4 to 8) includes at least one divider (7, 8) for division of two measured variables (A to F).

8. Angle measuring device according to Claim 7, wherein the divider (7, 8) includes at least one analogue-digital converter (8).

9. Angle measuring device according to Claim 7 or 8, wherein the divider (7, 8) includes at least one selection unit (7) for selection of at least one part of a measured variable (E, F) as divisor (H).

10. Angle measuring device according to one of the preceding claims, wherein at least one pointer element (4, 7) is provided, to generate a pointer signal (K, L, M) to display a specified value or value range of a measured variable (A to F).

11. Angle measuring device according to one of the preceding claims, wherein the revolution measuring device (11 to 22) includes at least one switch element (11), which is opened or closed depending on the rotatable actuating element (2).

## Revendications

1. Dispositif de mesure d'angle pour détecter la position absolue exacte d'un arbre de capteur pendant une rotation complète de celui-ci dans un intervalle d'angle de 0° à 360° et pour détecter le nombre de rotations de l'arbre, avec :
une unité d'enregistrement (1, 2) pour enregistrer la position à détecter de l'arbre de capteur avec des éléments d'enregistrement magnétosensibles,
l'unité d'enregistrement (1, 2) étant conçue pour produire au moins deux grandeurs de mesure périodiques (A à D) déphasées,
et l'unité d'enregistrement (1, 2) comprenant un élément d'actionnement (2) rotatif qui est couplé avec l'arbre de capteur ;
une unité d'analyse (3 à 22) pour l'analyse de la position à capter et pour l'indication angulaire de la position détectée de l'arbre de capteur ; et
avec un dispositif de mesure de rotations (11 à 22) pour détecter et sortir le nombre de rotations complètes de l'arbre,
**caractérisé en ce que** l'élément d'actionnement (2) est conçu comme un aimant permanent (2) et sert à la fois à capter le nombre de rotations complètes et à produire les grandeurs de mesure périodiques (A à D).

2. Dispositif de mesure d'angle selon la revendication 1, dans lequel l'unité d'enregistrement (1, 2) est conçue de telle sorte que les grandeurs de mesure (A à D) présentent le tracé d'une fonction trigonométrique.

3. Dispositif de mesure d'angle selon l'une des revendications précédentes, dans lequel l'unité d'enregistrement (1, 2) comprend au moins deux éléments d'enregistrement qui sont décalés l'un par rapport à l'autre dans le sens de rotation.

4. Dispositif de mesure d'angle selon l'une des revendications précédentes, dans lequel les éléments d'enregistrement sont conçus comme des éléments à effet Hall.

5. Dispositif de mesure d'angle selon l'une des revendications précédentes, dans lequel l'unité d'analyse (3 à 22) comprend au moins une unité de compensation (4 à 8) pour compenser les défauts.

6. Dispositif de mesure d'angle selon l'une des revendications précédentes, dans lequel l'unité de compensation (4 à 8) comprend au moins un organe de soustraction (4, 5) pour soustraire deux grandeurs de mesure (A à D).

7. Dispositif de mesure d'angle selon l'une des revendications précédentes, dans lequel l'unité de compensation (4 à 8) comprend au moins un dispositif de division (7, 8) pour diviser deux grandeurs de mesure (A à F).

8. Dispositif de mesure d'angle selon la revendication 7, dans lequel le dispositif de division (7, 8) comprend au moins un convertisseur analogique-numérique (8).

9. Dispositif de mesure d'angle selon la revendication 7 ou 8, dans lequel le dispositif de division (7, 8) comprend au moins une unité de sélection (7) pour sélectionner au moins une partie d'une grandeur de mesure (E, F) comme diviseur (H).

10. Dispositif de mesure d'angle selon l'une des revendications précédentes, dans lequel au moins un élément indicateur (4, 7) est prévu pour produire un signal indicateur (K, L, M) pour indiquer une valeur ou plage de valeurs prédéfinie d'une grandeur de mesure (A à F).

11. Dispositif de mesure d'angle selon l'une des revendications précédentes, dans lequel le dispositif de mesure de rotation (11 à 22) comprend au moins un élément de commutation (11) qui est ouvert ou fermé en fonction de l'élément d'actionnement rotatif (2).
